# EUROPEAN PATENT APPLICATION

(11) **EP 2 133 674 A1**
(43) Date of publication of application: **16.12.2009**
(21) Application number: 08158241.3
(22) Date of filing: 13.06.2008
(51) Int. Cl.: G01J 3/52, G01N 21/57

(54) **Visual Assessment Stand**

(71) Applicant: Akzo Nobel Coatings International B.V., 6824 BM Arnhem (NL)
(72) Inventor: Ashman, Eric, CONYERS, 30012 (US); Gottenbos, Roelof Johannes Baptist, NL-2353 KG, LEIDERDORP (NL)
(74) Representative: Schalkwijk, Pieter Cornelis

(57) **Abstract**

The invention relates to a visual assessment stand comprising
a) a board having a viewing side to which one or more panels can be removably attached for visual inspection, and
b) at least one light source capable of emitting a bundle of visible light directed towards the viewing side of the board and which light source is movable along the surface contour of a semicircle having its center in the plane of the viewing side of the board.

## Description

The invention relates to a visual assessment stand and to the use thereof.

An assessment apparatus for visual evaluation of coated panels is known from United States patent US 6891617 B. This document describes an apparatus for visual evaluation, at desired observation angles, of colour properties of paint colour samples which contain light-reflecting (e.g., metallic) flakes. The apparatus comprises a cylindrical or semi-cylindrical shaped body with two opposing slots to accept a colour sample panel, and secure the panel upon the central axis of the body. The circumference of the body has a partially glossy or mirrored reflective surface, and also has one or more marks indicating specific aspecular viewing angles relative to the plane of the colour sample panel. A disadvantage of the apparatus is that it does not provide a source of illumination and hence it is difficult to realize predetermined assessment geometries, i.e. combinations of angle of illumination and angle of observation, relative to the plane of the sample.

International patent application WO 2005/038343 A describes the use of a light-emitting apparatus for reducing the effect of metamerism when attempting to match colours of parts of an automotive vehicle when repairing the same, the light-emitting apparatus including a light source that emits a broad range of frequencies substantially the same as those that are normally apparent in natural sunlight; a filter, placed between the light source and a subject to be illuminated, said filter adjusting the range and/or intensity of frequencies emitted from the light source to cause the light illuminating subject to include frequencies at intensities that are closer to those normally included in natural sunlight as compared with those emitted from the light source; a housing for containing said light source and said filter, said housing

including an aperture through which light is emitted wherein said filter is exposed within or placed over said aperture; and an adjustable frame for supporting said housing. A disadvantage of this light-emitting apparatus is that it does not provide defined angles of illumination of panels.

Accordingly, there is a need for an apparatus which is suitable for the visual assessment of coloured panels which allows visual assessment of the panels at variable but well defined geometries of illumination and observation.

The invention now provides a visual assessment stand comprising
a) a board having a viewing side to which one or more panels can be removably attached for visual inspection, and
b) at least one light source capable of emitting a bundle of visible light directed towards the viewing side of the board and which light source is movable along the surface contour of a semicircle having its centre in the plane of the viewing side of the board.

The board is essentially planar and can be of any suitable material, for example wood or reconstituted wood, metal, or plastic. In one embodiment, the viewing side of the board has a white colour, for example a coating with a white paint. In another embodiment, the viewing side of the board is black. In still another embodiment, the viewing side of the board is grey. The panels can be removably attached to the board by any suitable means, for example adhesive tape. When the board is made of metal, the panels can also be attached by magnetic force. When the panels are punched, they may be attached to the board using pushpins. For inspection, the panels are suitably attached in the centre area of the viewing side of the board.

In one embodiment, the plane defined by the semicircle along the contours of which the light source can be moved is perpendicular to the plane of the board.

For correct assessment of the visual properties of coated panels it is often required to determine the visual properties under one or more specific geometries of illumination and viewing. This can be facilitated when the visual assessment stand additionally comprises a semicircular protractor for determination of the angle between the plane of the viewing side of the board and the bundle of visible light (illumination angle). The protractor can likewise serve to determine the angle between the plane of the viewing side of the board and the direction of observation by a human observer (viewing angle). In a preferred embodiment, the protractor is arranged parallel to the semicircle along which the light source can be moved.

For specific applications certain illumination angles and viewing angles are frequently used or even prescribed as standards. In this case it can be useful for the protractor to have indications of one or more predetermined illumination angles and/or indications of one or more predetermined viewing angles. The required assessment geometry can then be found easily. For the assessment of panels coated with effect paints, an illumination angle of 65 degrees and a viewing angle of 90 degrees constitute one such standard geometry. A further standard geometry would be an illumination angle of 45 degrees and a viewing angle of 25 degrees.

In one embodiment, the light source is connected to the board by a pivoting arm having its pivot in or close to the plane of the viewing side of the board. Alternatively, the light source may be connected to a sliding carriage which is movable along the protractor.

As mentioned above, the at least one light source is capable of emitting a bundle of visible light directed towards the viewing side of the board. The bundle of visible light may be focused by suitable lenses placed between the light source and the viewing side of the board. Alternatively or additionally, filters may be placed between the light source and the viewing side of the board in order to exclude certain wavelengths from the bundle of visible light reaching the panels to be assessed. In one embodiment, the spectral distribution of the visible light is essentially the same as the spectral distribution of natural sunlight. Examples of suitable light sources are incandescent light bulbs, fluorescent tubes or light-emitting diodes (LEDs). The light source may be battery powered or be powered by electricity from the grid. It is also possible to provide an electronic dimmer for control of the light intensity. An example of a commercially available suitable light source is the Sun Gun colour matching light ex 3M. The light source may also be implemented as an interchangeable light source. In that case, it is possible to select a light source having the desired wavelength distribution and or intensity, depending on the needs of the specific assessment job. In another embodiment, the stand is equipped with two different light sources facilitating quick assessment of panels under two different illumination conditions. In yet another embodiment, the stand is equipped with two light sources to provide illumination at two illumination angles.

The visual assessment stand of the invention can advantageously be used for comparison of the visual properties of two or more coated panels, in particular panels which are coated with an effect coating. The effect coatings generally include a metallic effect colour or a pearlescent effect colour. It is also possible that the coating exhibits a combination of metallic and pearlescent effects. Metallic effects in paints are suitably achieved by metallic particles present in the paint, for example aluminium flakes. Particles of other shapes or other metals can be used as well. Other special effect pigments which can be used are pearlescent pigments. The assessment stand can be very useful for comparison of panels representing the colour of an automobile or large transportation vehicle, such as a train, bus, truck, or transportation vehicle. Such a need may arise upon repair or refinishing, when the original colour has to be matched exactly.

## Claims

1. A visual assessment stand comprising
a) a board having a viewing side to which one or more panels can be removably attached for visual inspection, and
b) at least one light source capable of emitting a bundle of visible light directed towards the viewing side of the board and which light source is movable along the surface contour of a semicircle having its center in the plane of the viewing side of the board.

2. A visual assessment stand according to claim 1, wherein the plane defined by the semicircle is perpendicular to the plane of the board.

3. A visual assessment stand according to claim 1 or 2, wherein the light source is connected to the board by a pivoting arm having its pivot in or close to the plane of the viewing side of the board.

4. A visual assessment stand according to any one of the preceding claims, having additionally a semicircular protractor for determination of the angle between the plane of the viewing side of the board and the bundle of visible light (illumination angle) and for determination of the angle between the plane of the viewing side of the board and the direction of observation by a human observer (viewing angle).

5. A visual assessment stand according to claim 4, wherein the protractor is arranged parallel to the semicircle along which the light source can be moved.

6. A visual assessment stand according to claim 4 or 5, wherein the protractor has indications of one or more predetermined illumination angles.

7. A visual assessment stand according to any one of the preceding claims 4 to 6, wherein the protractor has indications of one or more predetermined viewing angles.

8. A visual assessment stand according to any one of the preceding claims, wherein the spectral distribution of the visible light is essentially the same as the spectral distribution of natural sunlight.

9. A visual assessment stand according to any one of the preceding claims, wherein the light source is interchangeable.

10. Use of the visual assessment stand according to any one of the preceding claims for comparison of the visual properties of at least two coated panels.

11. Use according to claim 10, wherein the panels are coated with an effect coating.

12. Use according to claim 10 or 11, wherein at least one of the coated panels represents the colour of an automobile or large transportation vehicle.
